# EUROPEAN PATENT SPECIFICATION

(11) **EP 0 850 532 B1**
(45) Date of publication and mention of the grant of the patent: **24.04.2002**
(21) Application number: 96931421.0
(22) Date of filing: 29.08.1996
(51) Int. Cl.: H04N 1/00

(54) **INTERNET FACSIMILE APPARATUS**
INTERNET-FAKSIMILEGERÄT
APPAREIL DE TELECOPIE POUR INTERNET

(30) Priority: 15.09.1995 US 528552
(43) Date of publication of application: 01.07.1998
(73) Proprietor: Kulakowski, Robert T., Leucadia, CA 92024 (US)
(72) Inventor: Kulakowski, Robert T., Leucadia, CA 92024 (US)
(74) Representative: Musker, David Charles
(86) International application number: US9613790
(87) International publication number: WO9710668

(56) References cited:
- EP-A- 0 615 377
- WO-A-92/12591
- US-A- 4 837 798
- US-A- 5 014 300
- US-A- 5 369 686

## Description

### BACKGROUND OF THE INVENTION

A conventional facsimile ("fax") machine optically scans a paper document and transmits the image in a digitally encoded format via a telephone connection to a remote fax machine. The remote fax machine decodes the image data and prints the resulting document on paper. A fax machine includes a fax modem. A modem is a device that converts data between the voltage modulated format used by digital computer circuitry and the frequency or phase modulated format required for transmission via a telephone connection. A fax modem is different from a data modem, such as the type conventionally used to allow two computers to communicate via a telephone connection. Although both fax modems and data modems perform the modulation and demodulation function, fax modems and data modems encode the data in accordance with different standards and use different communication protocols. The most common fax modem standard is known as the Group III ("G3") standards of the International Telecommunication Union (ITU). The highest speed fax modems support communication at a rate of 14,400 bits per second (bps) using ITU standard V.17. The most common data modem standards, which are also promulgated by the ITU, are V.34 (28,800 bits per second (bps)), V.32bis (14,400 bps), V.32 (9600 bps), V.22bis (2400 bps), V.22 (1200 bps), V.23 (600/1200 bps), and V.21 (300 bps). A fax modem operates in half-duplex mode, while a data modem operates in full-duplex mode. Modems known as "data/fax" modems can communicate in accordance with both ITU fax modem and ITU data modem standards. Data/fax modems are commonly used in computers, but neither data modems nor data/fax modems are used in fax machines. Consequently, a fax machine cannot communicate with a computer via a telephone connection.

Although two computers having modems can send messages, including ASCII-encoded text and bit-mapped images, to one another via a direct telephone connection, an increasingly common method for sending messages is known as electronic mail ("email"). A person can use a remote computer and modem to send messages to a central computer via a telephone connection. The central computer stores the message as well as the identity of the sender and intended recipient. The recipient can use another remote computer and modem to establish a telephone connection with the central computer and read or download any messages stored there that are intended for him to receive. An email message generally includes ASCII-encoded text and may also include an "attachment" consisting of a digitized image or digitized audio. Companies having such central computers that facilitate email communication between remote users are known generally as "on-line service providers." People who wish to use the email service pay fees to the on-line service provider and are known as subscribers or customers. Examples of well-known on-line service providers include COMPUSERVE, PRODIGY, AMERICA ON-LINE, FIDONET and BITNET.

Many service providers also provide access to the computer network known as the Internet. The Internet is a global super-network comprising numerous sub-networks. The service provider maintains a computer on one of the sub-networks that functions as a "gateway" onto the Internet for its customers computers. People all over the world can send and receive email with each other through service providers that provide Internet gateways. Service providers use standard, well-known protocols to send and receive email via the Internet, such as Simple Mail Transfer Protocol (SMTP) and Post Office Protocol (POP), which are part of the suite of over 100 protocols known as Transmission Control Protocol/Internet Protocol (TCP/IP). Although the most common method by which individuals access the Internet is via a service provider's gateway, any computer having the necessary hardware and software can be connected directly to the Internet.

An email message comprises a header, which includes the sender's address (source address) and the recipient's address (destination address), and the body of the message, all encoded in accordance with these protocols. As noted above, the body of the message typically includes ASCII-encoded text and may also include a digitized image or audio attachment. This email format may also be considered a consequence of a property of the Internet and most other computer networks known as packet switching. In a packet-switched network, messages are divided into packets, each including a source and destination address. The network routes each packet from its source to its destination independently of the other packets. In fact, in some networks, the packets may not arrive at their destination in the same order they were transmitted, and thus must be reassembled. A packet-switched computer network may be contrasted with a point-to-point network, such as the public switched telephone network (PSTN). When two parties communicate via the PSTN, a direct, dedicated connection exists between them.

To retrieve email from a service provider, the subscriber uses a computer and a modem, under the control of software that is typically provided by the service provider, to call the service provider's computer. When the service provider's computer answers, it typically queries the subscriber for a username and password. If the subscriber enters the correct username and password, the service provider's computer "logs in" the subscriber and allows the subscriber to perform various functions, including determining whether email messages intended for the subscriber have been received and stored and, if so, downloading the email messages to the subscriber's computer. When the subscriber is finished, the subscriber logs out and terminates the telephone call.

The subscriber can view the downloaded email messages and image attachments and listen to audio attachments. Typically, a computer reproduces an image attachment under the control of software via a video card and a video monitor, and reproduces an audio attachment under the control of software via a sound card and a speaker. Nevertheless, certain data and data/fax modems have integral digital-to-analog converter circuitry and compression circuitry to facilitate voice message communication. The computer can selectably place the modem in either a data mode or an audio mode.

Software is known that causes a computer and modem to periodically, e.g., once every hour, call a service provider, log in, determine whether any email messages have been received and stored, and download any such email messages, and log out. Mail Handling System (MHS), produced by Novell Corporation, is an example of such software that can be run on a Novell network server.

Certain service providers provide an email-to-fax forwarding service. The service provider receives an email message from a subscriber, converts the body of the message into an image in accordance with fax standards, and re-transmits the fax image via a telephone connection to a recipient's fax machine. The sender provides the telephone number of the recipient's fax machine as part of the email message header.

Certain service providers provide a fax-to-email forwarding service. The service provider receives a fax via a telephone connection, attaches the fax image to an email header, and re-transmits it as an email message to a subscriber. The sender prints the recipient's email address on a designated area of the fax cover sheet, and the service provider reads the address using optical character recognition (OCR) methods.

Interface devices for connecting fax machines directly to computer networks are known. For example, U.S. Patent No. US-A-5,014,300, issued to Harvath et. al., describes device that detects when the fax machine dials a telephone number that can be reached via the network, converts the telephone number into a network access number, sends network subscriber and address information encoded as a Dual Tone Multi-Frequency (DTMF) signal, and then connects the calling fax machine to a fax-based store-and-forward network. U.S. Patent No. US-A-5,339,156, issued to Ishii, describes a linked mail/message system that links a data message system with a fax mail system that relies on OCR or DTMF keypad input for address routing and subscriber information. These types of systems require the sender either to interactively enter username, password, and destination routing information for each call, or to print this information on the fax cover sheet. U.S. Patent No. US-A-4,837,798, issued to Cohen et al., describes a unified message system with mailboxes capable of handling email and fax messages. This system assumes that each fax mailbox on a system has a unique telephone number. The systems described in the above-referenced patents are directly connected to a private computer network. Therefore, such systems cannot be used by remote users who have no direct connection to the network.

U.S. Patent No. US-A-5,369,686, issued to Dutra et al., shows an enhanced service for rerouting point-to-point telephone calls when the transmission attempt fails. This device detects a failure in a fax call (busy, reorder, etc.) and then dials a store-and-forward (enhanced service) private network. After the enhanced service private network is called, the device transfers a caller ID to the enhanced service via a data modem, and then connects the calling fax modem to the telephone line, so that the calling fax modem sends a fax using standard Group III fax techniques.

WO-A-92/12591 discloses a way of sending faxes via a computer network, by modifying the fax data fields to include a destination address on said network.

EP-A-0 615 377 discloses a converter connected directly to a computer network, which receives faxes and converts then to emails.

Fax machines that connect directly to a local area network (LAN) without special interface equipment for converting fax formats to computer network formats have been proposed by Microsoft Corporation of Redmond, Washington under the name MICROSOFT AT WORK. Because such a fax machine would connect directly to the LAN, it would not include a data modem. It has been proposed to enable such a fax machine to selectably send a fax via either the LAN or the PSTN. In essence, the proposed MICROSOFT AT WORK fax machine is a fax file server for data networks.

It would be desirable to provide a system for economically transmitting faxes to remote recipients at maximum transmission speeds. These problems and deficiencies are clearly felt in the art and are solved by the present invention in the manner described below.

### SUMMARY OF THE INVENTION

The present invention includes a fax machine and a method for transmitting or receiving fax messages via a packet-switched computer network to which the device connects itself via the public switched telephone network (PSTN) as claimed in appended claims 1 and 5. The fax machine is an integrated fax machine including an image scanner, printer, keypad and other features of a conventional fax machine. The sender dials the recipient's telephone number on the fax machine keypad or handset. To send a fax, the sender feeds a document into the fax machine which scans it in the conventional manner. The fax machine establishes a telephone connection via the PSTN with a computer on the network, such as that of an on-line service provider. The fax machine converts the fax or voice data to be transmitted into a suitable email format, with a header that indicates the email address of the intended recipient and an attachment representing the fax image or voice data. The fax machine then transmits the email message to the service provider. The service provider's computer may route the email message to the recipient via any packet-switched network to which its computer is connected. Via the Internet, the email message can be sent to any recipient having access to the Internet. The transmission cost to the sender is minimal because there are no direct charges for use of the Internet.

The service provider's computer may forward the email message to the recipient immediately upon receiving the message, or it may store the message. If the recipient both possesses the fax machine of the present invention and subscribes to an on-line service, the service provider may automatically call and establish a telephone connection with the recipient's fax machine, and then download the email message into the recipient's fax machine. Alternatively, the recipient's fax machine may manually, in response to a command entered by the recipient, or automatically at predetermined intervals, call and establish a telephone connection with the on-line service, and upload any stored e-mail messages addressed to the recipient. In either event, the recipient's fax machine then causes the fax to be printed. If the recipient does not possess the fax machine of the present invention, the recipient may read the email message, including the attached image, using a computer and suitable software for viewing email messages on the computer screen.

The fax machine thus preferably enables a user to send and receive faxes via the Internet in the same manner to which the user is accustomed to sending faxes using a conventional fax machine. The user preferably dials the recipient's telephone number, and the fax machine converts the telephone number into the recipient's email address. The fax machine may include a directory that stores a predetermined correspondence, in any suitable format, between telephone numbers and e-mail addresses. Nevertheless, in certain embodiments, a user may enter the recipient's email address directly, using a suitable keypad or other input means included in the fax machine.

In accordance with the present invention, users may send faxes to distant recipients without incurring long-distance telephone charges. The invention uses the PSTN only to connect to an on-line service provider, which typically provides a local telephone number for its subscribers to call. The invention may then transmit the message via the Internet, which anyone may presently use without incurring any charges other than those of the on-line service provider. The invention thus allows faxes to be sent worldwide significantly more economically than is possible using prior art fax systems. The invention also allows faxes to be sent at speeds significantly higher than are possible using prior art fax systems because data modems typically operate at higher speeds than fax modems. Importantly, the invention is completely transparent to a user; the user may send and receive faxes in the manner to which the user is accustomed, without learning any new procedures.

The foregoing, together with other features and advantages of the present invention, will become more apparent when referring to the following specification, claims, and accompanying drawings.

### BRIEF DESCRIPTION OF THE DRAWINGS

For a more complete understanding of the present invention, reference is now made to the following detailed description of the embodiments illustrated in the accompanying drawings, wherein:
Figure 1 is a schematic illustration of a system for transmitting faxes via network service providers;
Figure 2 is a block diagram of a device for interfacing a fax machine to a telephone line;
Figure 3 is a block diagram of an integrated fax machine device;
Figure 4 illustrates an email message having an attached fax image;
Figure 5 is a flow diagram illustrating a method for transmitting a fax message having an image attachment via a network;
Figure 6 illustrates software modules with which the interface device may be programmed;
Figure 7 is a flow diagram illustrating a method for retrieving messages having image attachments stored by a network service provider;
Figure 8 is a flow diagram illustrating a method for receiving messages provided by a network service provider;
Figure 9 is a flow diagram illustrating a method for transmitting a fax message having a voice attachment via a network; and
Figure 10 is a flow diagram illustrating a method for retrieving messages having voice attachments stored by a network service provider.

### DESCRIPTION OF PREFERRED EMBODIMENTS

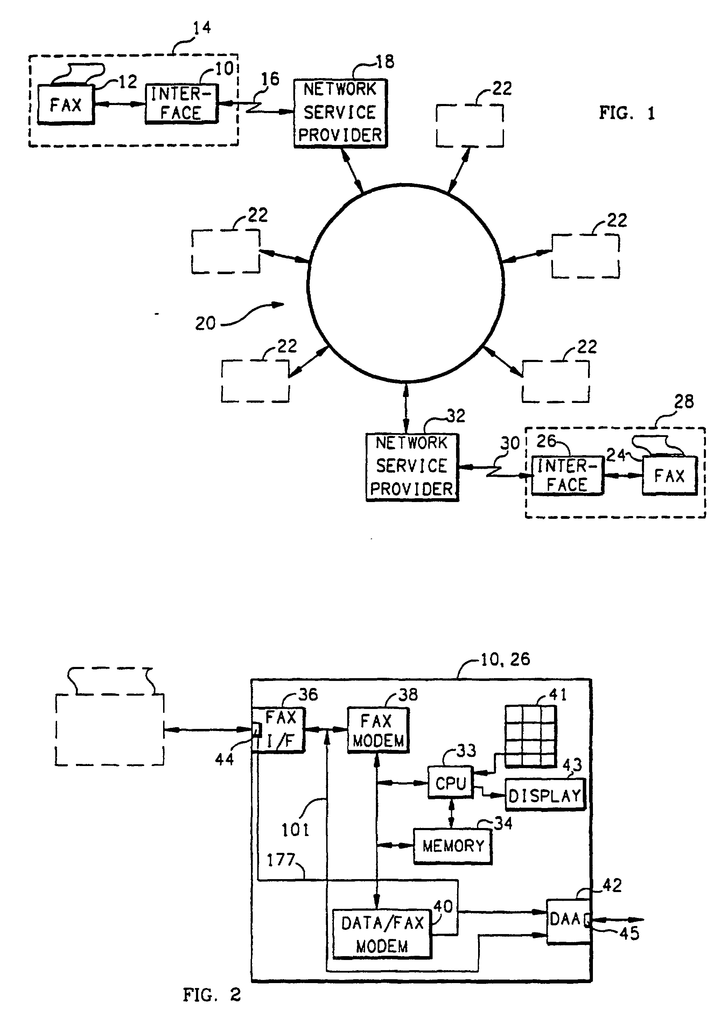

As illustrated in Fig. 1, an interface device 10 connects a conventional fax machine 12 to a telephone line. In certain embodiments, interface device 10 and fax machine 12 may be integrated into a fax machine device 14. Interface device 10 can communicate via a telephone connection 16 with a network service provider computer system 18 via the public switched telephone network (PSTN), as described in further detail below. Service provider computer system 18 is connected to a packet-switched computer network 20. Computer network 20 is preferably the Internet or a subnetwork of the Internet. (The ring-like topology of computer network 20 shown in Fig. 1 is for illustrative purposes only, and is not otherwise significant to the invention.) Other computer systems 22, some or all of which may be those of similar service providers that provide dial-up service to subscribers via the PSTN, may be connected to network 20.

As described in detail below, a user may send a fax or a voice message from fax machine 12 to a recipient's fax machine 24. An interface device 26, which may be identical to interface device 10, connects fax machine 24 to a telephone line. As noted above with respect to interface device 10 and fax machine 12, interface device 26 and fax machine 24 may be integrated into a single fax machine device 28 in certain embodiments. Interface 26 can communicate via a telephone connection 30 with a network service provider computer system 32 via the PSTN. As noted above, the topology of computer network 20 is not relevant to the invention. Indeed, service provider computer systems 18 and 32 may be connected to different sub-networks of the Internet or other super-network. Service provider computer systems 18 and 32 may be connected via the PSTN to the same computer system, such as service provider computer system 18 or service provider computer system 32. Whether a sender and a recipient subscribe to service providers on opposite sides of the world or subscribe to the same network service provider and thus share the use of that service provider's computer system, any fax sent to a recipient who can be reached via email will be routed via network 20.

As illustrated in Figure 2, interface devices 10 and 26 each comprise a processor 33, a memory 34, fax interface circuitry 36, a fax modem 38, a data/fax modem 40, telephone interface 42 circuitry, a keypad 41 and a display 43. Interface devices 10 and 26 may further comprise any additional support circuitry (not shown) commonly used in computer systems, such as circuity for supporting a printer, serial port, local area network (LAN) connections, or voice inputs and outputs. Although this dual-modem approach provides advantages described below, fax modem 38 is preferred but not necessary.

Fax interface circuitry 36 emulates the signals normally provided on the telephone line by a telephone company via the PSTN. These signals include a ring signal, dial tone, and a loop-current signal. Fax interface circuitry 36 also includes a DTMF decoder (not shown) for detecting telephone numbers dialed on the fax machine to which it is connected. Fax interface circuitry 36 also includes a telephone standard Data Access Arrangement (DAA) that provides the electrical interface to a fax machine. In the United States this interface will conform to the requirement of Federal Communications Commission (FCC), Part 68. Accordingly, as those of skill in the art will appreciate, fax interface circuitry 36 preferably includes a hook-relay, off-hook detection circuitry, and a 600 ohm telephone transformer (not shown), as well as a RJ-11 jack 44 for connecting to a corresponding jack (not shown) on the fax machine using a suitable cable or cord.

Telephone interface 42 includes a standard telephone Data Access Arrangement (DAA) that provides the electrical interface to the telephone line. Accordingly, as those of skill in the art will appreciate, telephone interface 42 preferably includes a hook-relay and a 600 ohm telephone transformer (not shown), as well as a RJ-11 jack 45 for connecting to the telephone line floor or wall jack using a suitable cable or cord. For the reasons described in further detail below, the data-side connection of telephone interface 42 is selectably switchable between a data and a fax connection. As noted above, in other embodiments, telephone interface 42 may conform to the ISDN standards.

Processor 33 is preferably an economical 8-bit microprocessor or microcontroller, such as an Intel 80186 or NEC V-25. Nevertheless, any processor or combination of processors or equivalent programmable control logic capable of being programmed to perform the method of the present invention, as described below, is suitable.

Memory 34 stores suitable program instructions for operating processor 33 in accordance with the method of the present invention described below. Memory 34 also stores incoming or outgoing fax messages in accordance with the method of the present invention described below. Memory 34 preferably includes non-volatile Random Access Memory (RAM), and either static RAM (SRAM) memory, dynamic RAM (DRAM) memory, flash memory, credit-card memory, magnetic memory (floppy or hard-disk), or a combination of any of these. Memory 34 preferably has at least 512 kbytes of memory.

Fax modem 38 operates in accordance with ITU fax transmission standards in half-duplex mode, as do all fax-only modems. Any suitable fax modem 38 may be used, such as a Rockwell R96EFXL or Yamaha YTM401.

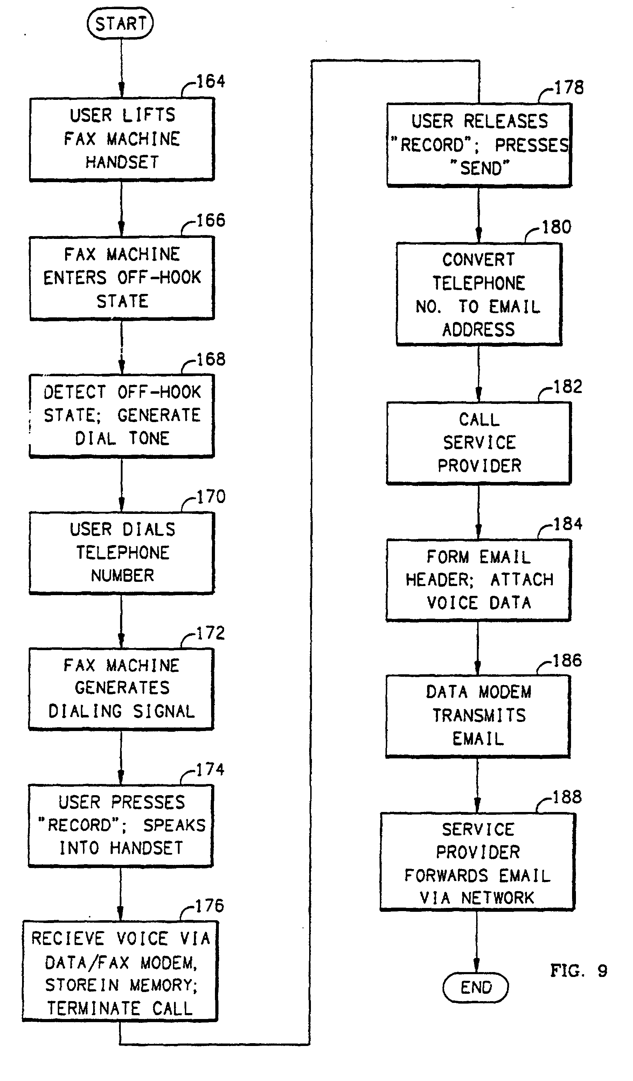

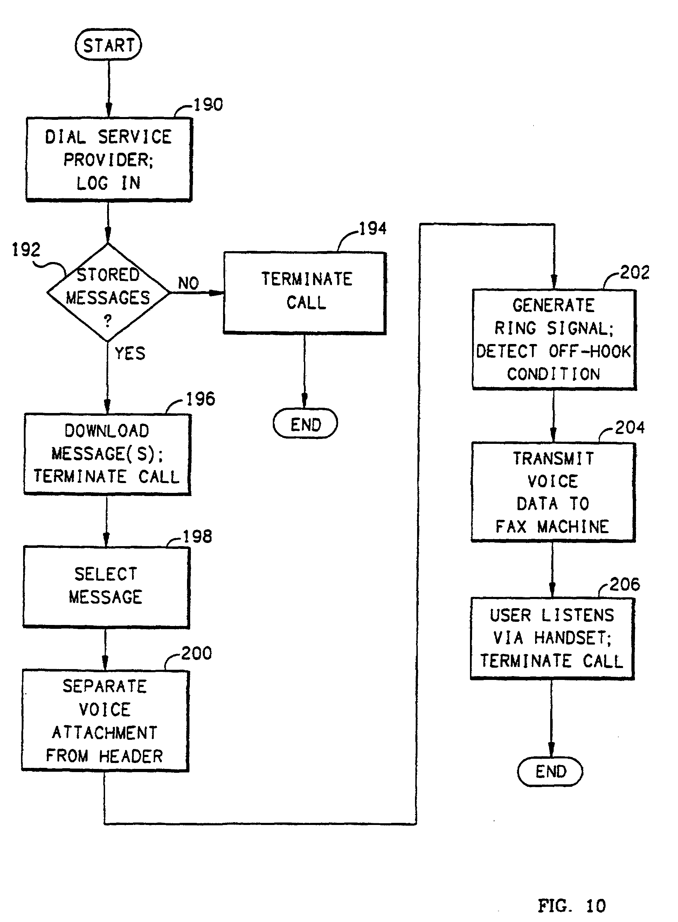

Data/fax modem 40 is a well-known type of modem that, as the term "data/fax" implies, can selectably operate in accordance with either ITU data transmission standards or ITU fax transmission standards. Although any suitable data/fax modem 40 may be used, modem 40 preferably has an operating speed of 14.4 kbps or greater and preferably supports ITU V.34, V.32bis, V.32, V.22bis, V.21 and Bell 212 data communication standards, as well as ITU V.17, V.33, V.29, V.27ter, and V21 Group III fax communications standards. Although it is suitable to provide support only for data communication, support of both data and fax communication in data/fax modem 40 allows simultaneous activity using both fax modem 38 via fax interface 36 and data/fax modem 40 via telephone line interface circuitry 42, as further described below. Data/fax modem 40 may be, for example, a Rockwell V.FC 288 or AT&T HSM 28.8 with the manufacturer's fax firmware option or, if the telephone line to which interface device is to be connected is an ISDN line, data/fax modem 40 may be an ISDN modem. To facilitate voice mail communication, discussed below with respect to Figs. 9 and 10, data/fax modem 40 also preferably includes the manufacturer's voice firmware option.

Although keypad 41 may be of any type commonly used in fax machines for dialing a telephone number, it preferably includes a full "QWERTY" computer-style keyboard to enable a user to compose email messages, as described below. Display 43 may be any type of display, including LCD and CRT displays, but preferably displays several lines of text to enable a user to read email messages, as described below.

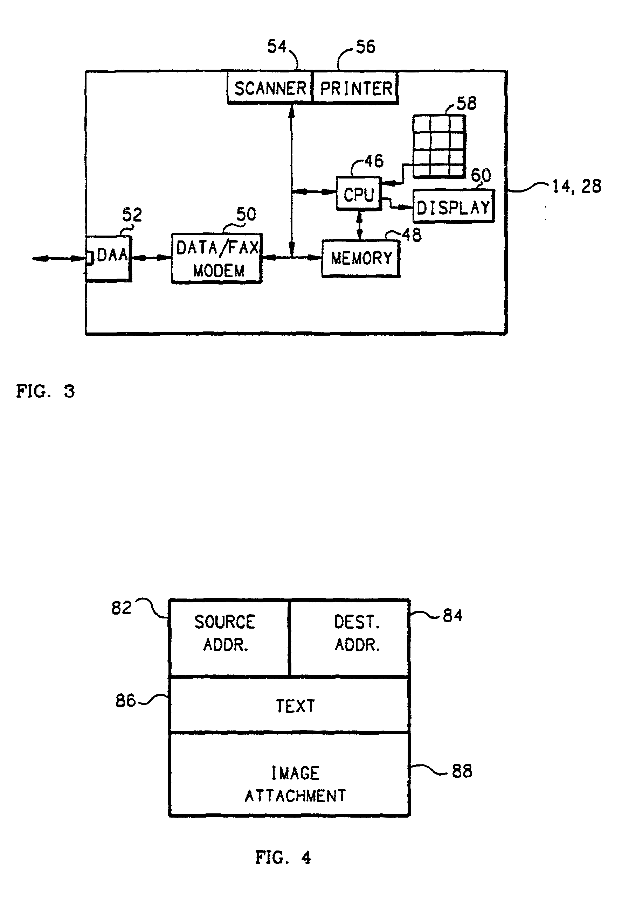

As illustrated in Fig. 3, the present invention is embodied in an integrated fax machine, such as fax machine devices 14 and 28 shown in Fig. 1. Fax machine devices 14 and 28 each comprise a processor 46, a memory 48, a data/fax modem 50, a telephone interface 52, a scanner 54, a printer 56, a keypad 58 and a display 60. Scanner 54 may be of any type commonly used in fax machines for optically scanning documents. Similarly, printer 56 may be of any type commonly used in fax machines for printing received faxes. Keypad 58 and display 60 may be identical to keypad 41 and display 43, described above with respect to Fig. 2. Processor 46 and memory 48 may be identical to processor 33 and memory 34 described above with respect to Fig. 2. Also, telephone interface 52 may be identical to telephone interface 45, described above with respect to Fig. 2, with the exception that it has only a single data-side connection rather than two selectably switchable connections. Data/fax modem 50 is a well-known type of modem that, as the term "data/fax" implies, can selectably operate in accordance with either ITU data transmission standards or ITU fax transmission standards. Although any suitable data/fax modem 50 may be used, it preferably has an operating speed of 9.6 kbps or greater and preferably supports ITU V.32, V.34, V.32bis data communication standards and ITU V.21, V.29, V.27 and V.33 fax communication standards. Data/fax modem 50 may be, for example, a Rockwell V.FC 28.8 with fax firmware option. To facilitate voice mail communication, discussed below with respect to Figs. 9 and 10, data/fax modem 40 also preferably includes the manufacturer's voice firmware option.

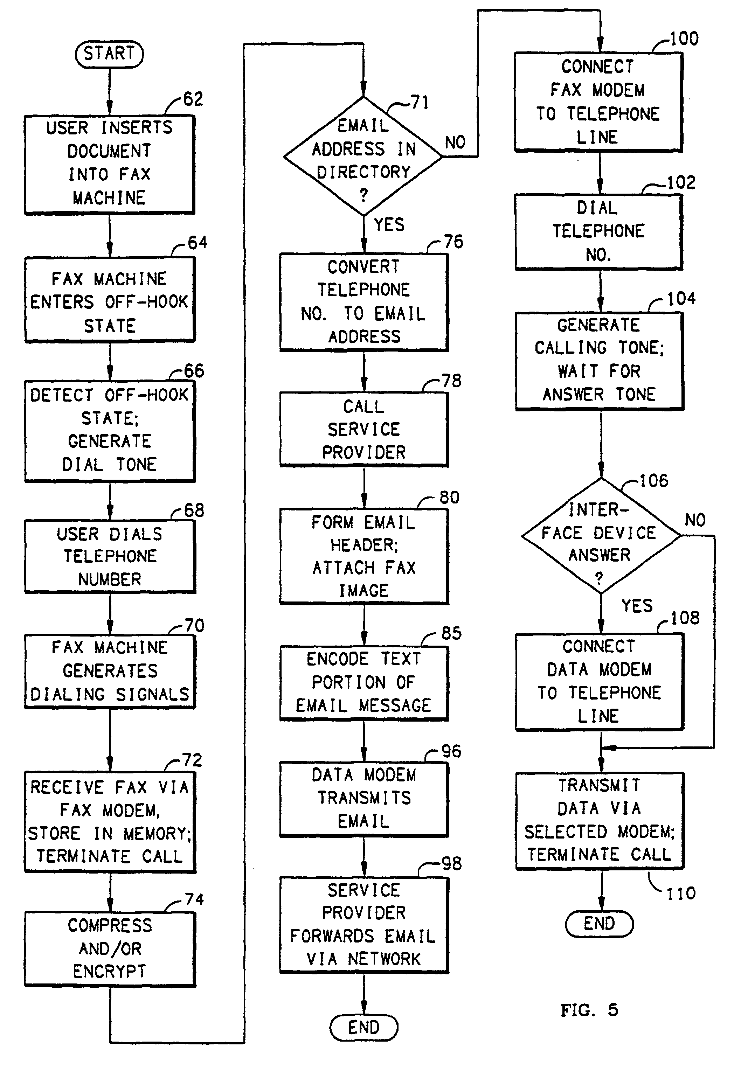

Figure 5 illustrates the method of sending a fax via a computer network in accordance with the present invention. Although the method is described below with respect to the operation of the fax interface device shown in Fig. 2, the method, according to the invention, is performed using the integrated fax machine device shown in Fig. 3. Referring briefly to Fig. 1, a user may send a fax, for example, from fax machine 12 to fax machine 24. The sender (user) operates fax machine 12, and the recipient (another user) operates fax machine 24 in the same manner as they would any conventional fax machines. Returning to Figs. 5 and 2, at step 62 the sender inserts the document sheet(s) to be transmitted. In response, fax machine 12 enters an off-hook state at step 64. At step 66 fax interface 10 detects the off-hook condition and, in response, provides a dial tone to fax machine 12 that emulates the dial tone that the telephone company would normally provide on a customer's telephone line in response to an off-hook condition.

At step 68 the sender dials the recipient's telephone number using the keypad on fax machine 12. Alternatively, the sender may enter the recipient's email address using keypad 41. As a still further alternative, the sender may select a telephone number from a directory stored in memory 34 that includes recipients' names and corresponding telephone numbers. The sender may use keypad 41 to scroll through names and telephone numbers that are displayed in display 43 and then select one. At step 70 fax machine 12 generates the DTMF or pulse signals that indicate the dialed telephone number, and fax interface 10 receives and decodes the DTMF or pulse dialing signal. Fax machine 12 then generates a standard 1100 Hz calling tone. In response to dialing signals, fax interface 10 removes the dial tone and, in response to the calling tone, generates the standard 2100 Hz answer tone that emulates the signal an answering fax machine would normally provide. In response to the answer tone, fax machine 12 begins transmitting fax image data scanned from the document sheet(s). Persons of skill in the art will readily be capable of designing circuitry for generating and receiving these communication signals.

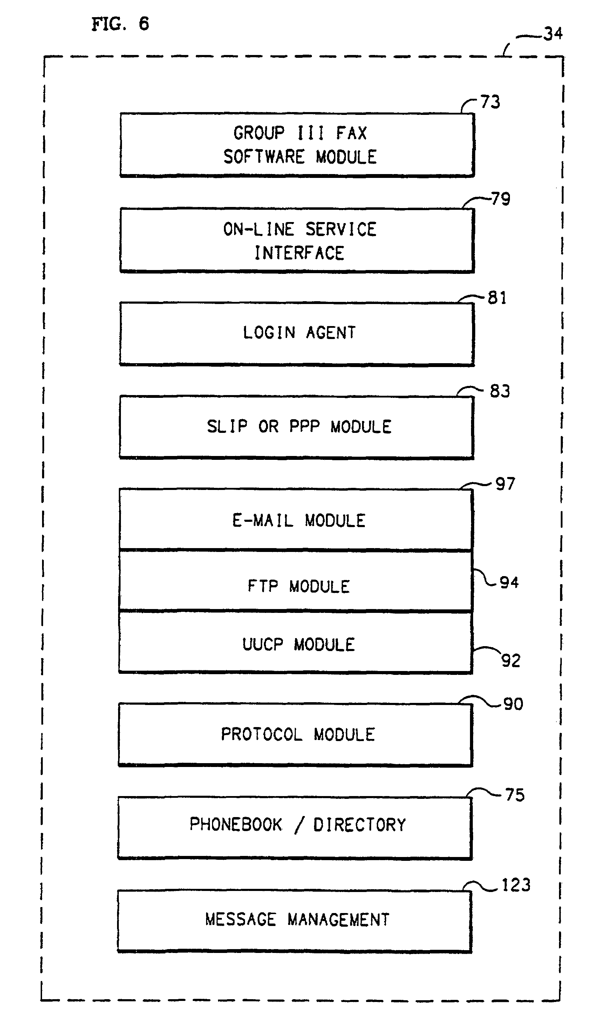

At step 72 fax modem 38 of fax interface 10 receives the fax image data from fax machine 12. Figure 6 conceptually illustrates, among other software modules stored in non-volatile portions of memory 34, a Group III fax software module 73 that operates fax modem 38 in accordance with ITU Group III fax communication protocols. Processor 33 stores this incoming data in memory 34. When the transmission is complete, fax machine 12 enters the on-hook state or "hangs up" the emulated telephone call, the same as it would an actual telephone call. Although compression is not necessary, at step 74 processor 33 may compress the data stored in memory 34 using a suitable compression method. Similarly, processor 33 may encrypt the stored data.

Also shown in Fig. 6 is a directory 75 that represents telephone numbers and corresponding email addresses. The email addresses may be stored as ASCII-encoded alphanumeric domain names, such as "DOE@XYZ.COM", or as numeric Internet protocol (IP) addresses. Processor 33 receives the dialed telephone number and reads the directory to determine whether the dialed telephone number is present. At step 71 processor 33 determines whether the dialed number and its corresponding email address are present in the directory. If the dialed telephone number is present, at step 76 processor 33 reads the corresponding email address. This directory may be pre-stored by entering the information manually via keypad 41, via a storage device such as a floppy disk, or via an on-line connection to a service provider or similar entity. If the sender enters an e-mail address using keypad 41 instead of dialing a telephone number using fax machine 12, step 76 is not performed.

When processor 33 is to transmit an email message, it selectably connects data/fax modem 40 to telephone interface circuitry 42. At step 78 processor 33 causes data/fax modem 40 to dial the pre-stored telephone number of service provider 18. (As used herein, the term "service provider" refers to the computer system and related telecommunications equipment at that site rather than any individual or company operating the computer system.) Processor 33 may obtain this telephone number and any setup information needed to configure data/fax modem 40 from a non-volatile portion of memory 34. This telephone number and setup information may be pre-stored in memory 34 by entering the information manually via keypad 41 in response to prompts provided on display 43. Service provider 18 answers the call and thus establishes telephone connection 16.

Processor 33 then logs in to service provider 18 by transmitting a username, password and any other information requested by service provider 18. Persons of skill in the art will readily be capable of writing suitable software for logging on to a remote service provider. Figure 6 conceptually illustrates, among other software modules stored in non-volatile portions of memory 34, an on-line service interface 79 and a login agent 81. Such software is well-known to persons of skill in the art familiar with on-line communications programming, and are therefore not described in detail herein. On-line service interface 79 includes software to establish a connection with the on-line service and send and receive files and email, and to check on the status of email, as described in further detail below. If service provider 18 provides a connection environment utilizing the Serial Line Internet Protocol SLIP or Point-to-Point Protocol (PPP), on-line service interface 79 should include a SLIP/PPP software module 83.

At step 80 processor 33 creates an email message, shown conceptually in Fig. 4. The email message includes a header comprising a source address 82 and a destination address 84. Addresses 82 and 84 may be domain names that are converted to Internet addresses as the message is processed by mail servers, in the well-known manner used in the Internet. Destination address 84 is the recipient's address that processor 33 retrieved from the directory or that the sender entered manually using keypad 41. The email message may also include text 86 that the sender enters at this time using keypad 41. Processor 33 may execute suitable software (not illustrated) stored in memory 34 to enable the sender to compose and edit such text. Similarly, in other embodiments, processor 33 may execute suitable software to enable the sender to record, review, revise and delete voice messages. Processor 33 appends the header to text 86 and attaches the fax image data 88 that was stored in memory 34 at step 72. At step 85 processor 33 may convert the eight-bit fax image data into seven-bit data if the on-line service provider is incapable of receiving eight-bit email messages. Persons of skill in the art will be familiar with the need for such eight-to-seven bit email conversion. An example of a protocol for performing this conversion is the well-known MIME email extension.

Persons of skill in the art will readily be capable of writing suitable software for creating email messages including attached image or voice files. Figure 6 conceptually illustrates, among other software modules stored in non-volatile portions of memory 34, software for sending and receiving email via the Internet. Such modules are well-known to persons of skill in the art familiar with Internet programming, and are therefore not described in detail herein. Protocol module 90 preferably includes a Transport Control Protocol / Internet Protocol (TCP/IP). Processor 33 may use TCP/IP to encapsulate the data for transmission to on-line service provider 18. Nevertheless, the software modules should include the protocols in accordance with which on-line service provider 18 requires e-mail messages be formatted and transmitted. For example, if on-line service provider 18 is a Unix-based system, a Unix to Unix Copy Program (UUCP) 92 may be included. In addition a File Transport Protocol (FTP) agent 94 may be included to provide Internet FTP support. Similarly, software modules supporting other file transport protocols such as ZMODEM, XMODEM and YMODEM, may be included.

At step 96 processor 33 sends an email message with attached fax image to service provider 18. As shown conceptually in Fig. 6, an email agent 97 controls email communication with the email server of service provider 18. Email agent 97 may include any suitable email protocols, such as Multipurpose Internet Mail Extensions (MIME), Simple Mail Transfer Protocol (SMTP), uuencode and uudecode for encoding and decoding email attached messages and the Post Office Protocol (POP). Email agent 97 may also support telescript protocols developed by General Magic Corp. of Sunnyvale, California.

At step 98 service provider 18 receives the email message via telephone connection 16 and retransmits it via network 20. The email message received from interface device 10 has the same format as all email messages service provider 18 receives from its subscribers for retransmission via network 20. Therefore, service provider 18 processes the email message in the conventional manner. If the email message is not yet formatted in accordance with the required Internet protocols, service provider 18 completes the formatting.

The device of the present invention also can send faxes via the PSTN. As described above, at step 71 (Fig. 5), processor 33 determines whether the directory includes an email address corresponding to the dialed telephone number. If not, at step 100 processor 33 selectably connects the telephone line side 101 of fax interface circuitry 36 to telephone interface circuitry 42, thereby bypassing data/fax modem 40. Alternatively, fax modem 38 may receive the fax data via fax interface 36 and store it in memory 34. Data/fax modem 40 then retrieves the data and transmits it using fax communication standards via telephone interface circuitry 42. The sender need not be concerned whether the recipient possesses a device of the present invention or even whether the recipient possesses a system for reading email, because the present invention automatically transmits the data using fax communication standards if email is not possible. At step 102, processor 33 dials the recipient's telephone number that the sender entered or selected at step 68. Fax modem 38 then transmits the standard 1100 Hz fax calling tone and, at step 104, waits for the 2100 Hz fax answer tone that indicates the recipient's fax machine has answered the call. As described below in further detail, at step 106 process 32 determines whether an interface device of the present invention rather than the recipient's conventional fax machine answered. If the recipient's fax machine answered, at step 110 fax modem 38 begins transmitting the fax image data stored in memory 34, under control of processor 33. Persons of skill in the art will readily be capable of designing suitable software to read this data from memory 34 and transmit it via a modem. When the transmission is completed, fax modem 38 enters the on-hook state, thereby hanging up the telephone call.

It is advantageous to temporarily store the fax data in memory 34, as described above, because it facilitates compression or encryption of the data by processor 33. In addition to compression and encryption, processor 33 can implement Group III Error Correcting Mode (ECM), fax broadcast, fax mail boxes and fax relay features if fax machine 12 does not include them. Furthermore, this method may be used to increase the transmission speed of existing fax machines when transmitting to faster fax machines. It is anticipated that fax machines faster than Group III (14,400 bps) will soon be commercially available. This method may facilitate communication between existing Group III fax machines and the anticipated faster fax machines because fax modem 38 may conform to the new standards. Nevertheless, routing fax data directly to telephone interface circuitry 42 as it is received from fax interface circuitry 36 is also suitable.

As noted above, at step 106 processor 33 determines whether an interface device of the present invention answered the call. If so, at step 108 processor 33 disconnects fax modem 38 and connects data/fax modem 40 to telephone line interface circuitry 42. Thus, at step 110 the image data will be transmitted using a higher-speed data communication standard, preferably ITU V.34, which provides a transmission rate twice as high as the 14,400 bps that Group III fax communication standards provide.

Processor 33 determines whether an interface device has answered in response to the type of answer tone that is received. As noted above, the standard answer tone specified by ITU T.30 is a 2100 Hz signal having an active duration of 2.6 to 4 seconds. Telephone line interface circuitry 42 includes circuitry (not shown) for generating and detecting a modified answer tone signal comprising a 2100 Hz signal having phase changes. In the receiving interface device, such as interface device 26 (Fig. 1) in the example described herein, telephone line interface circuitry 42 detects the presence or absence of these phase changes in the answer tone and provides the detection results to processor 33. Alternatively, telephone line interface circuitry 42 includes circuitry (not shown) for generating and detecting a modified answer tone signal comprising a 2100 Hz signal and an additional tone signal, such as a 1650 Hz signal having an active duration of 500 ms that follows the 2100 Hz signal.

As noted above with respect to step 98 in Fig. 5, after service provider 18 receives the email message it received via PSTN connection 16, service provider 18 forwards the email message via network 20. This gateway process is not described herein because service provider 18 forwards the email message in the conventional manner it uses to forward all email messages regardless of their source. Service provider 18 packetizes the email message if the format in which the email is received from interface device 10 is not already a packetized format. In Internet terminology, packets are known as datagrams. Each packet or datagram includes a source address and a destination address. In the example herein, the destination address represents the address of service provider 32. Routers (not shown) on network 20 route the email message packets or datagrams to service provider 32. The term "packet-switching" refers to the routers' use of the destination address to route the packets.

The service provider provides the email messages it receives to the subscribers to whom the email messages are addressed. In the above example, the recipient's interface device 26 will receive the email message from service provider 32. Service provider 32 may temporarily store the email messages it receives for later retrieval initiated by the subscribers to whom the email messages are addressed. Either service provider 32 or interface device 26 may initiate transfer of the email messages. If service provider 32 initiates the transfer, it may do so periodically or, preferably, immediately upon receiving an email message. If interface device 26 initiates the transfer, it periodically polls service provider 32 to determine if any messages have been stored. Conventionally, a subscriber can dial a service provider and download stored messages into the subscriber's computer using suitable software, which is typically provided by the service provider. In the present invention, the recipient's interface device performs a similar retrieval or polling function.

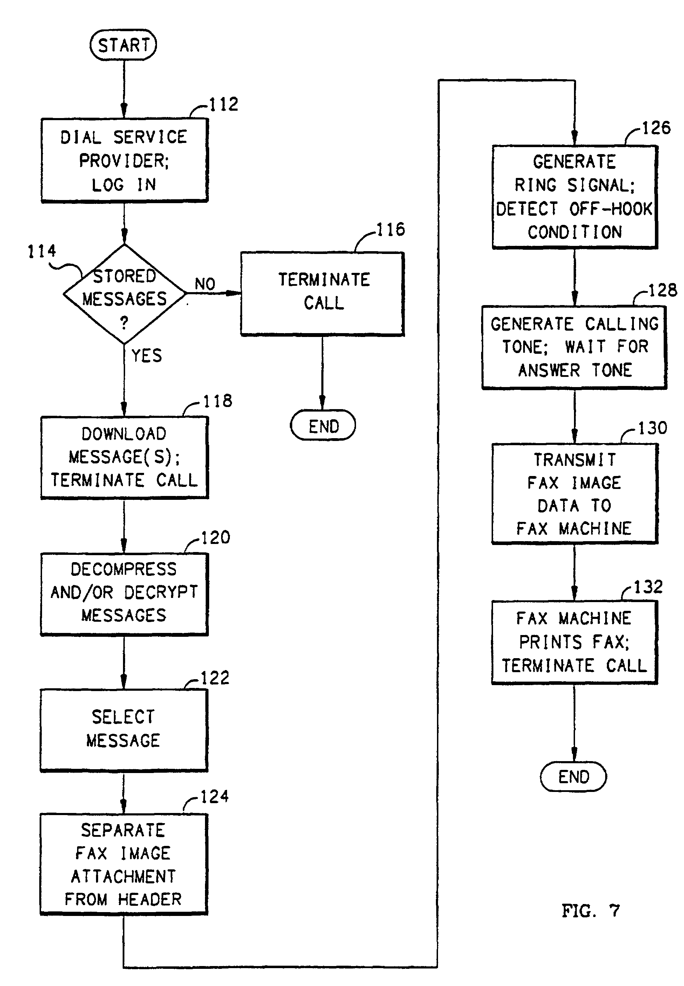

Figure 7 illustrates a method for transferring email messages at the initiation of interface device 26. At step 112 processor 33 of interface device 26 dials the telephone number of service provider 32. When service provider 32 answers the telephone call, processor 33 of interface device 26 logs in to service provider 32 under the control of login agent 81 (Fig. 6). The login process is as described above with respect to network service provider 18. At step 114 processor 33, under control of email agent 97 (Fig. 6), determines whether service provider 32 has stored any email messages addressed to it. If no email messages have been stored, it terminates, i.e., hangs-up, the call by placing data/fax modem 40 on-hook at step 116. If email messages have been stored, however, processor 33 downloads the messages under control of email agent 97 and stores them in memory 34 at step 118. At step 120 processor 33 decompresses or decrypts messages that have been compressed or encrypted. At step 122 processor 33 selects a message to print.

The user (recipient) may set up interface device 26 using the message management software module 123 illustrated in Fig. 6. Message management software module 123 allows a user to selectively list, delete, forward and compose text replies to received email messages stored in memory 34. Persons of skill in the art will readily be capable of designing such software. Display 43 allows a user to view at least the sender's email address and preferably other information, such as the time and date the message was received. A user can set up message management software module 123 to select (at step 122) messages for printing in the order in which they were received. Alternatively, a user can review the message information on display 43 and select a certain message using keypad 41. In addition, when an email message is received, message management software module 123 sends commands to service provider 32 to delete the message from storage at on-line service provider 32. Furthermore, message management software module 123 monitors the status of email messages that have been sent. As known in the art, when an email message is not delivered due to network, routing, or other problems, the network router that was unable to deliver it returns to the sender an email error message indicating that the message was undelivered. When message management software module 123 detects such an error message, it sends the fax data corresponding to the fax image attachment of the undelivered email message using fax modem 38.

At step 124 processor 33 of interface device 26 separates the fax image attachment from the email header of the selected message. At step 126 fax interface circuitry 36 of interface device 26 generates a ring signal emulating that which the telephone company would normally provide. Fax interface circuitry 36 waits for fax machine 24 to answer by entering the off-hook state. At step 128 fax interface circuitry generates a calling tone emulating that which a calling fax machine would normally generate. In response to the answer tone, fax modem 38 transmits the fax image data to fax machine 24 at step 130. At step 132 fax machine 24 prints the received fax and then terminates the call in the conventional manner.

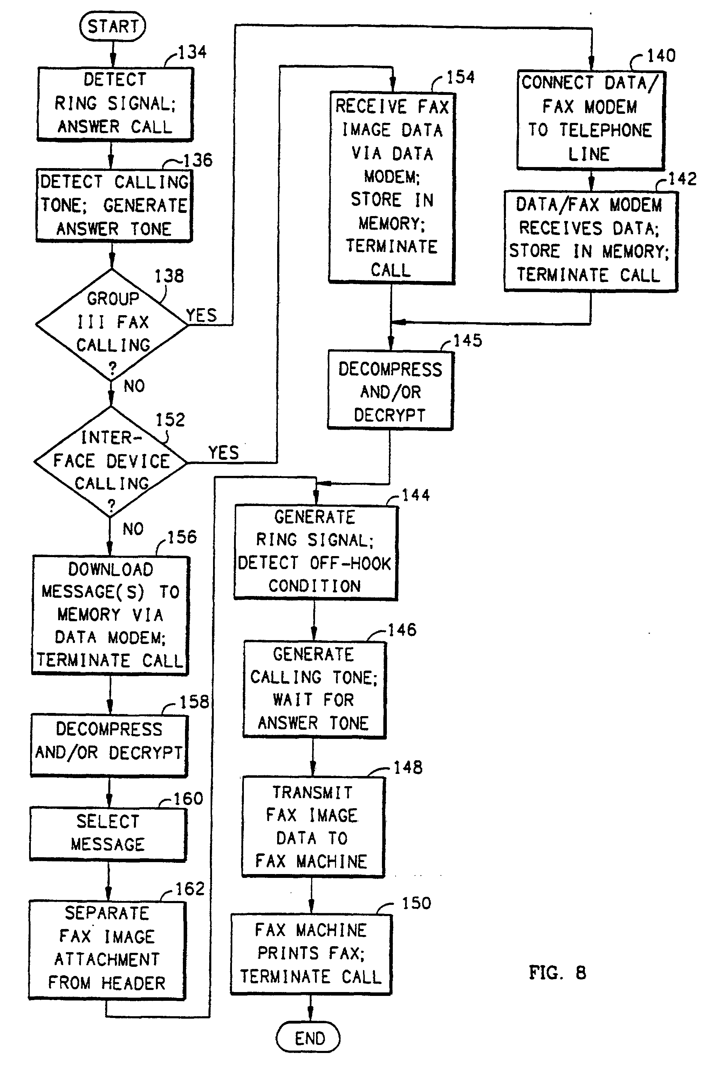

Alternatively to the above-described method by which fax interface 26 polls service provider 32 to determine whether email messages have been received, service provider 32 may automatically and immediately send any email message it receives. Service provider 32 may forward the email message immediately upon receiving it, periodically, or at a predetermined time. Figure 8 illustrates a method that interface device 26, under the control of processor 33, performs for receiving conventional faxes and email messages, the latter either from service provider 32 or from another device of the present invention. At step 134 interface device 26 detects a ring signal via telephone line interface circuitry 42 and answers the call by entering the off-hook state. At step 136 telephone line interface circuitry 42 waits for the calling tone and generates the answer tone. If, at step 138, the standard 1100 Hz Group III fax calling tone is detected, processor 33 preferably proceeds to step 140 and selectably connects data/fax modem 40 to telephone interface circuitry 42. At step 142, data/fax modem 40, using fax communication standards, can then receive fax data, which processor 33 stores in memory 34. When the fax data transfer is complete, service provider 32 and interface device 26 terminate the call. At step 145 processor 33 may decompress and/or decrypt the received data. Alternatively, processor 33 selectably connects the telephone line side 101 of fax interface circuitry 36 to telephone interface circuitry 42 before step 142. If at the time the call is received, however, fax modem 38 is busy receiving fax data via fax interface 36, the fax may alternatively be received via data/fax modem 40.

At step 144 fax interface circuitry 36 generates the ring signal and waits for fax machine 24 to enter the off-hook condition. Fax machine 24 handles this call in the manner it would a conventional telephone call from another Group III fax machine. At step 146 fax interface circuitry 36 generates the standard 1100 Hz Group III calling tone and waits for the standard 2100 Hz Group III answer tone. At step 148 processor 33 retrieves the fax image data from memory 34 and transfers it in fax format to fax machine 24 via fax modem 38. At step 150 fax machine 24 terminates the call and prints the fax it received in the conventional manner.

Returning to step 138, if the calling tone does not indicate a Group III fax machine is calling, processor 33 determines whether the calling tone indicates another interface device of the present invention is calling. in a manner similar to that discussed above with respect to the answer tone, the calling tone can include phase changes or a second tone to indicate that the sending device is not a standard Group III fax, but rather another interface device of the present invention. If, at step 152, such a modified calling tone is detected, processor 33 proceeds to step 154. At step 154 data/fax modem 40 receives the data, which processor 33 stores in memory 34. When the fax data transfer is complete, service provider 32 and interface device 26 terminate the call. At step 145 processor 33 may decompress and/or decrypt the received data. At steps 144-150, processor 33 transfers the data to fax machine 24, and fax machine 24 prints the received fax in the manner described above with respect to these steps.

Returning to step 152, if the calling tone does not indicate either a Group III fax machine or an interface device of the present invention is calling, but rather a data modem is calling, processor 33 proceeds to step 156. The data to be transferred therefore represents an email message with attached fax image. At step 156 processor 33 receives the data via data/fax modem 40 and stores it in memory 34. When the data transfer is complete, service provider 32 and interface device 26 terminate the call. At step 158 processor 33 may decompress and/or decrypt the received data. At step 160 processor 33 selects a message for printing in the manner described above with respect to step 122 (Fig. 7). At step 162 processor 33 separates the fax image attachment from the email header, as described above with respect to step 124 (Fig. 7). At steps 144-150, processor 33 transfers the data to fax machine 24, and fax machine 24 prints the received fax in the manner described above with respect to these steps.

After interface device 26 receives an email message having an attached fax image, either in the manner described above with respect to Fig. 7 or the manner described above with respect to Fig. 8, interface device 26 may send a return email message to interface device 10, acknowledging receipt.

The present invention can also transmit voice messages as email attachments in a manner similar to which it transmits fax images as email attachments. In that respect, Fig. 9, which illustrates the method of sending a voice message via a computer network, is similar to Fig. 5. Although the method is described below with respect to the operation of the fax interface device shown in Fig. 2, the method may alternatively be performed using the integrated fax machine device shown in Fig. 3. Referring briefly to Fig. 1, a user may send a voice message, for example, from fax machine 12 to fax machine 24. Returning to Figs. 9 and 2, at step 164 the sender lifts the handset (not shown) of fax machine 12. In response, fax machine 12 enters an off-hook state at step 166. At step 168 fax interface 10 detects the off-hook condition and, in response, provides a dial tone to fax machine 12 that emulates the dial tone that the telephone company would normally provide on a customer's telephone line in response to an off-hook condition.

At step 170 the sender dials the recipient's telephone number using the keypad on the handset of fax machine 12. Alternatively, the sender may enter the recipient's email address using keypad 41. As a still further alternative, the sender may select a telephone number from a directory stored in memory 34 that includes recipients' names and corresponding telephone numbers. The sender may use keypad 41 to scroll through names and telephone numbers that are displayed in display 43 and then select one. At step 172 fax machine 12 generates the DTMF or pulse signals that indicate the dialed telephone number, and fax interface 10 receives and decodes the DTMF or pulse dialing signal.

After dialing is complete, at step 174 the user presses a button labeled "RECORD" (not shown) on keypad 41 of fax interface 10. While holding down the "RECORD" button, the user speaks into the handset microphone and dictates a voice message. At step 176 data/fax modem 40 receives this voice signal via audio line 177. Audio line 177 connects the telephone line side of data/fax modem 40 directly to RJ-11 jack 44. In response to the user pressing the "RECORD" button, processor 33 activates the voice function in data/fax modem 40. In this voice mode, data/fax modem 40 interprets incoming signals on the telephone line side as analog voice signals and thus digitizes them. Such modems are well-known in the art. As noted above, voice mode is a firmware option in commercially available modems. The firmware typically includes compression, and data/fax modem 40 may thus compress the incoming voice signal. Processor 33 routes the digital output of data/fax modem 40 to memory 34 and stores it. Although compression is preferably performed in data/fax modem 40, alternatively, processor 33 may compress the data after it has been stored in memory 34.

At step 178, when the user is finished dictating the message, the user releases the "RECORD" button. In response, processor 33 ceases storing the data in memory 34. Releasing the "RECORD" button may cause processor 33 to re-play the stored voice message data via a suitable digital-to-analog (D/A) converter (not shown) and the handset speaker (not shown) of fax machine 12. If the user is satisfied with the recorded message, the user presses a "SEND" button (not shown) on keypad 41.

At step 180 processor 33 reads the email address corresponding to the dialed telephone number from the directory, in the same manner as described above with respect to step 76 of Fig. 5.

At step 182 processor 33 selectably connects data/fax modem 40 to telephone interface circuitry 42 and causes data/fax modem 40 to dial the pre-stored telephone number of service provider 18, establishes a telephone connection and logs in to service provider 18 in the same manner as described above with respect to step 78 of Fig. 5.

At step 184 processor 33 creates an email message and attaches the voice data that was stored in memory 34 at step 176. At step 186 processor 33 sends an email message with voice attachment to service provider 18 in the same manner as described above with respect to step 96 of Fig. 5. At step 188 service provider 18 receives the email message via telephone connection 16 and retransmits it via network 20 in the same manner as described above with respect to Fig. 5.

The present invention receives voice messages as email attachments in a manner similar to which it receives fax images as email attachments. In that respect, Fig. 10, which illustrates the method of receiving voice messages via a computer network, is similar to Fig. 7. At step 190 processor 33 of interface device 26 dials the telephone number of service provider 32. When service provider 32 answers the telephone call, processor 33 of interface device 26 logs in to service provider 32 in the manner described above with respect to step 112 of Fig. 7. At step 192 processor 33 determines whether service provider 32 has stored any email messages addressed to it. If no email messages have been stored, it terminates, i.e., hangs-up, the call by placing data/fax modem 40 on-hook at step 194. If email messages have been stored, however, processor 33 downloads the messages and stores them in memory 34 at step 196. At step 198 processor 33 selects a message to print in the same manner as described above with respect to step 122 of Fig. 7.

At step 200 processor 33 of interface device 26 separates the voice data attachment from the email header of the selected message. At step 202 fax interface circuitry 36 of interface device 26 generates a ring signal emulating that which the telephone company would normally provide. Fax interface circuitry 36 waits for fax machine 24 to answer by entering the off-hook state. At step 204 processor 33 sets data/fax modem 40 to voice mode and provides the voice data to the computer side of data/fax modem 40. Data/fax modem 40 converts this digital data to an analog audio signal and provides the audio signal on audio line 177. At step 206 fax machine 24 receives the audio signal and reproduces the voice message, to which the user listens through the handset speaker. When the message has been played, the user may hang up the handset.

Alternatively to the above-described method by which fax interface 26 polls service provider 32 to determine whether email messages have been received, service provider 32 may automatically and immediately send email messages it receives that include voice attachments. In a manner similar to that described above, fax interface 26 would receive the message from service provider 32, store it, and provide a ring signal to fax machine 24. When the user lifts the handset of fax machine 24, interface device transmits the audio signal, and fax machine 24 reproduces the voice message, to which the user listens through the handset speaker.

The present invention enables a person to use a conventional fax machine, such as fax machine 12 in the above-described example, to send a fax or voice message to a remote recipient having a conventional fax machine, such as fax machine 24, via the Internet. A fax is sent in the form of an image attachment to an email message, and a voice message is sent in the form of an audio attachment to an email message. The device that interfaces the sender's fax machine to the telephone line, interface device 10 in the above-described example, receives the image or voice signal from the sender's fax machine, forms the email message header and attaches the image or voice data. The fax is preferably routed via one or more Internet service providers, such as service providers 18 and 32 in the above-described example. The device that interfaces the recipient's fax machine to the telephone line, interface device 24 in the above-described example, receives the email message, removes the attachment from the email header and provides the image data or voice signal to the recipient's fax machine.

This novel method allows people who do not have direct access to the Internet to avoid long-distance charges associated with transmitting faxes and voice messages via the PSTN. The service providers provide the Internet access as well as storage space for email messages. Routing messages via a service provider simplifies the design of the interface device of the present invention and minimizes the amount of memory it must include. Although it is preferred to send the email message via Internet service providers, alternatively, email messages having attached fax images or voice messages can be sent between two such interface devices directly connected to one another via the PSTN. Long-distance charges are minimized because the invention maximizes the data transfer rate.

From the user's perspective, the present invention operates transparently. The sender and receiver each uses his or her fax machine in the conventional manner. If the intended recipient cannot receive email or does not possess an interface device of the present invention, the sending interface device transmits the data in fax format in the conventional manner.

Obviously, other embodiments and modifications of the present invention will occur readily to those of ordinary skill in the art in view of these teachings. Therefore, this invention is to be limited only by the following claims, which include all such other embodiments and modifications when viewed in conjunction with the above specification and accompanying drawings.

## Claims

1. A facsimile machine for communicating with a computer network, comprising:
an optical scanner [54] for generating image data;
a memory [48] for storing data;
an input device [58] for receiving recipient identifying information;
modem [50] coupled to said memory for transmitting and receiving data, said modem being capable of communication via a telephone network; and
a processor [46] for receiving said recipient identifying information from said input device,
**characterised in that** said processor converts said recipient identifying information to a destination address representing a destination computer on the computer network, associates said image data with said destination address, and controls transmission of said image data and associated destination address in the form of an e-mail message to said computer network, via said modem (50).

2. The facsimile machine claimed in claim 1, further comprising:
a directory memory for storing a predetermined correspondence between a plurality of said recipient identifying information and a plurality of destination addresses.

3. The facsimile machine claimed in claim 1, further comprising:
a printer [56] for producing documents bearing a visual representation of received data.

4. The facsimile machine claimed in claim 1, wherein said input device comprises a keyboard for receiving text data input by a user.

5. A method for transmitting facsimile machine information to a computer network via a communication network, comprising the steps of:
generating fax data for transmission using an optical scanner;
generating a destination address corresponding to a destination computer on said computer network;
converting said data for transmission to the form of an e-mail, and associating it with said destination address; and
establishing a remote connection with said computer network on said communication network;
**characterised by** the further step of
transmitting said e-mail via said communication network using said remote connection without first transmitting said data as facsimile data.

6. The method for transmitting facsimile machine information claimed in claim 5, wherein said step of generating a destination address comprises the steps of:
receiving a telephone number; and
converting said telephone number to said destination address in response to a predetermined correspondence between said telephone number and said destination address.

7. The method for transmitting facsimile machine information claimed in claim 5, including the further step of:
if said transmitting said e-mail is unsuccessful, then transmitting said data for transmission to a remote facsimile machine via a public switched telephone network.

8. The method for transmitting facsimile machine information claimed in claim 5, including the further step of:
receiving an e-mail error message indicating that the computer network was unable to deliver the e-mail, then transmitting said data for transmission in a facsimile format to a remote facsimile machine via a public switched telephone network.

## Patentansprüche

1. Facsimilegerät zur Verbindung mit einem Computernetzwerk, mit:
einem optischen Scanner (54) zum Erstellen von Bilddaten;
einem Speicher (48) zum Speichern von Daten;
einer Eingabevorrichtung (58) zum Empfangen einer Empfängeridentifikationsinformation;
einem mit dem Speicher gekoppelten Modem (50) zum Übertragen und Empfangen von Daten, das fähig ist mit einem Telefonnetzwerk in Verbindung zu treten; und
einem Prozessor (46) zum Empfangen der Empfängeridentifikationsinformation von der Eingabevorrichtung,
**dadurch gekennzeichnet, daß**
der Prozessor die Empfängeridentifikationsinformation in eine einen Zielcomputer in dem Computernetzwerk repräsentierende Zieladresse umwandelt, die Bilddaten der Zieladresse zuordnet, und die Übertragung der Bilddaten und der zugeordneten Zieladresse an das Computernetzwerk über das Modem (50) in Form einer e-Mail-Mitteilung steuert.

2. Facsimilegerät nach Anspruch 1, mit weiterhin:
einem Verzeichnis-Speicher zum Speichern einer vorbestimmten Zuordnung zwischen mehreren Empfängeridentifikationsinformationen und mehreren Zieladressen.

3. Facsimilegerät nach Anspruch 1, mit weiterhin:
einem Drucker (56) zum Erstellen von Dokumenten, die die visuelle Darstellung der empfangenen Daten tragen.

4. Facsimilegerät nach Anspruch 1, wobei
die Eingabevorrichtung eine Tastatur zum Empfangen von von einem Benutzer eingegebenen Textdaten umfaßt.

5. Verfahren zum Übertragen einer Facsimilegerät-Information an ein Computernetzwerk über ein Verbindungsnetzwerk, wobei:
zu übertragende Facsimiledaten mittels eines optischen Scanners erstellt werden;
eine einem Zielcomputer in dem Computernetzwerk zugeordnete Zieladresse erstellt wird;
die Übertragungsdaten in e-Mail-Form umgewandelt und der Zieladresse zugeordnet werden; und
eine Fernverbindung mit dem Computernetzwerk in dem Verbindungsnetzwerk eingerichtet wird;
**dadurch gekennzeichnet, daß**
die e-Mail über das Verbindungsnetzwerk mittels der Fernverbindung übertragen wird, ohne die Daten zuerst als Facsimiledaten zu übertragen.

6. Verfahren zum Übertragen einer Facsimilegerät-Information nach Anspruch 5, wobei beim Erstellen einer Zieladresse:
eine Telefonnummer empfangen wird; und
die Telefonnummer aufgrund einer vorbestimmte Zuordnung zwischen der Telefonnummer und der Zieladresse in die Zieladresse umgewandelt wird.

7. Verfahren zum Übertragen einer Facsimilegerät-Information nach Anspruch 4, wobei weiterhin:
falls die Übertragung der e-Mail erfolglos ist, die Übertragungsdaten an ein entferntes Facsimilegerät über ein allgemeines Telefonwählnetz übertragen werden.

8. Verfahren zum Übertragen einer Facsimilegerät-Information nach Anspruch 5, wobei weiterhin:
eine e-Mail-Fehlermeldung empfangen wird, die anzeigt, daß das Computernetzwerk die e-Mail nicht zustellen konnte, worauf die Übertragungsdaten in Facsimileformat an ein entferntes Facsimilegerät über ein allgemeines Telefonwählnetz übertragen werden.

## Revendications

1. Appareil de télécopie pour communiquer avec un réseau informatique, comprenant :
un scanneur optique [54] pour générer des données d'image,
une mémoire [48] pour mémoriser des données,
un dispositif d'entrée [58] pour recevoir des informations d'identification de destinataire,
un modem [50] relié à ladite mémoire pour émettre et recevoir des données, ledit modem étant apte à communiquer via un réseau téléphonique, et
un processeur [46] pour recevoir lesdites informations d'identification de destinataire provenant dudit dispositif d'entrée,
**caractérisé en ce que** ledit processeur convertit lesdites informations d'identification de destinataire en une adresse de destination représentant un ordinateur de destination dans le réseau informatique, associe lesdites données d'image à ladite adresse de destination, et commande la transmission desdites données d'image et de ladite adresse de destination associée sous forme d'un message de courrier électronique audit réseau informatique, via ledit modem [50].

2. Appareil de télécopie selon la revendication 1, comprenant en outre : une mémoire répertoire pour mémoriser une correspondance déterminée au préalable entre une pluralité desdites informations d'identification de destinataire et une pluralité d'adresses de destination.

3. Appareil de télécopie selon la revendication 1, comprenant en outre : une imprimante [56] pour produire des documents qui portent une représentation visuelle des données reçues.

4. Appareil de télécopie selon la revendication 1, dans lequel ledit dispositif d'entrée comprend un clavier pour recevoir des données de texte entrées par un utilisateur.

5. Procédé pour transmettre des informations d'appareil de télécopie à un réseau informatique via un réseau de communication, comprenant les étapes consistant à :
générer des données de fax en utilisant un scanneur optique, en vue de leur transmission,
générer une adresse de destination correspondant à un ordinateur de destination dudit réseau informatique,
convertir lesdites données en vue de leur transmission sous forme d'un message de courrier électronique, et l'associer à ladite adresse de destination, et
établir une connexion à distance avec ledit réseau informatique par ledit réseau de communication,
**caractérisé par** l'étape supplémentaire consistant à
transmettre ledit message de courrier électronique via ledit réseau de communication en utilisant ladite connexion à distance sans transmettre d'abord lesdites données en tant que données de télécopie.

6. Procédé pour transmettre des informations d'appareil de télécopie selon la revendication 5, dans lequel ladite étape de génération d'une adresse de destination comprend les étapes consistant à :
recevoir un numéro de téléphone, et
convertir ledit numéro de téléphone en ladite adresse de destination en réponse à une correspondance déterminée au préalable ente ledit numéro de téléphone et ladite adresse de destination.

7. Procédé pour transmettre des informations d'appareil de télécopie selon la revendication 5, comprenant l'étape supplémentaire consistant à :
si ladite transmission dudit message de courrier électronique est un échec, alors transmettre lesdites données en vue de leur transmission jusqu'à un appareil de télécopie éloigné via un réseau téléphonique public commuté.

8. Procédé pour transmettre des informations d'appareil de télécopie selon la revendication 5, comprenant l'étape supplémentaire consistant à :
recevoir un message d'erreur de courrier électronique indiquant que le réseau informatique n'a pas été capable de délivrer le message de courrier électronique, puis transmettre lesdites données en vue de leur transmission sous un format de télécopie jusqu'à un appareil de télécopie éloigné via un réseau téléphonique public commuté.
